# EUROPEAN PATENT SPECIFICATION

(11) **EP 1 162 781 B1**
(45) Date of publication and mention of the grant of the patent: **06.09.2006**
(21) Application number: 01112856.8
(22) Date of filing: 31.05.2001
(51) Int. Cl.: H04L 9/32, H04L 9/30

(54) **System and method for generation of a signature certificate in a public key infrastructure**
Vorrichtung und Verfahren zur Erzeugung eines Unterschriftszertifikats in einer Infrastruktur mit öffentlichen Schlüsseln
Système et procédé de génération d'un certificat de signature dans une infrastructure à clé publique

(30) Priority: 01.09.2000 US 229336; 09.06.2000 US 210525; 16.10.2000 US 690280
(43) Date of publication of application: 12.12.2001
(73) Proprietor: NORTHROP GRUMMAN CORPORATION, Los Angeles, CA 90067-2199 (US)
(72) Inventor: Aull, Kenneth W., Fairfax, VA 22030 (US)
(74) Representative: Schmidt, Steffen J.

(56) References cited:
- WO-A-00/07330
- WO-A-99/35783
- ANONYMOUS: "Certificate links" MCI WORLDCOM NETWORK SERVICES, [Online] 6 October 2000 (2000-10-06), XP002231147 Retrieved from the Internet: <URL:http://www.worldcom.com/global/legal/ pki/server/> [retrieved on 2003-02-13]

## Description

### BACKGROUND

### Field of the Invention

This invention relates to Public Key Infrastructures (PKI), and more specifically to generation of signature certificates in a PKI.

### Background Information

A public key infrastructure (PKI) is a collection of servers and software that enables an organization, company, or enterprise to distribute and manage thousands of unique public/private cryptographic keys in a manner that allows users to reliably determine the identity of the owner of each public/private key pair. When each member of an enterprise has a unique key, paper-based business processes may be transitioned to an online, electronic equivalent. Public/private key pairs have the property that for any given public key there exists one and only one private key, and vice versa. Public key cryptography (i.e., the ability to publicly distribute the encryption key) can be used to digitally sign documents. If a particular message can be decrypted using one member of the key pair, then the assumption is that the message must have been encrypted using the other member. If only one person knows the key used to perform the encryption of a document in the first place, then the recipients that can decrypt the document can be sure that the sender of the document must be that person.

However, for a digital signature to be meaningful, the recipient of an object signed with the digital signature must first be able to reliably determine the owner and integrity of the key used to sign the object. Public infrastructures accomplish this using an electronic document called a digital certificate. Certificates may contain information identifying the owner of the key pair, the public component of the pair, and the period of time for which the certificate is valid. The certificate may also identify technical information about the key itself, such as the algorithm used to generate the key, and the key length. Certificates are generated by organizations, companies, or enterprises that are responsible for verifying the identity of individuals (or in some instances organizations) to which certificates are issued. The certifying organization is known as a certificate authority. The certificate authority signs each certificate using a private key known only to the certificate authority itself. This allows users of the PKI to verify both the integrity of the certificate and the identity of the authority that issued it. By issuing a certificate, a certificate authority is stating that it has verified that the public key that appears in the certificate (and, by extension, the corresponding private key) belongs to the individual listed in the certificate. The integrity with which the registration process operates is, therefore, of great importance. The process must provide mechanisms for reliably identifying the individual and for verifying that the public key listed in the certificate belongs to that individual.

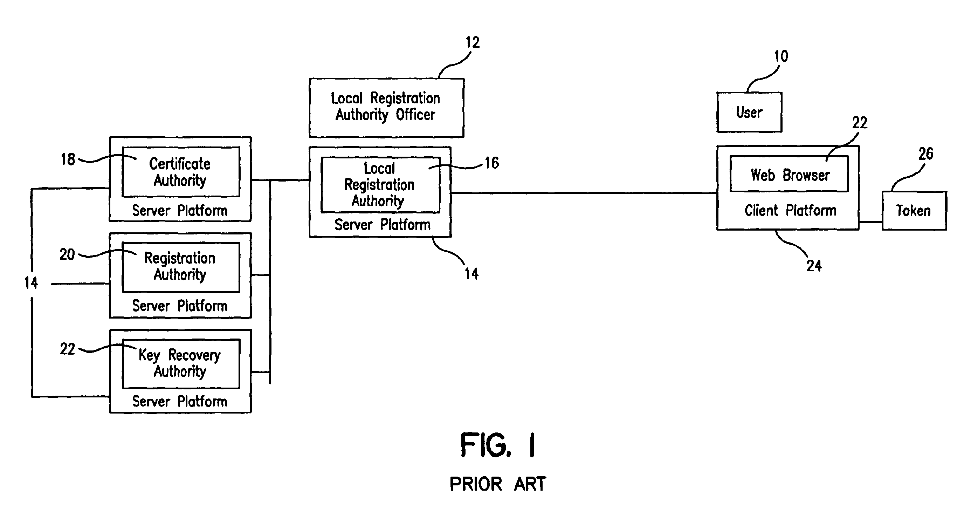

Fig. 1 shows a block diagram of an example PKI system architecture. Current PKIs that provide strong authentication of user identity accomplish this via the use of a local registration authority officer (LRAO) 12. LRAO 12 operates at a work station or server platform 14 that runs a local registration authority software application 16. Server platform 14 may be any known computing device that may serve as a server, e.g., computer, workstation, etc. The local registration authority application 16 interfaces to other server platforms that may contain applications such as a certificate authority application 18, a registration authority application 20, and/or a key recovery authority application 22. Each application may be on the same server platform, or on separate individual server platforms 14. A user 10, that is using or desires access to the PKI system architecture, accesses the system via a web browser 22 on a client platform 24. A hardware token 26, such as a smart card, may also be operably connectable to client platform 24. Typically in current systems, user 10 presents a photo I.D. or other documentation to the local registration authority officer 12 in order to authenticate the user's identity. Local registration authority officer 12 then uses workstation 14 and local registration authority application 16 to signal a registration authority application 20 to register new user 10 in the system. Local registration authority application 16 may be off-the-shelf product software that comes typically bundled with a certificate authority application 18, registration authority application 20, and key recovery authority 22 software.

A public/private key pair is generated by either the local registration authority application 16 or the registration authority application 20 (depending on products chosen and depending on how they've been configured). The public key is sent to certificate authority application 18 to be signed, thereby, generating a certificate for new user 10. A backup copy of the private key may also be sent to key recovery authority application 22, however, normally the private key is kept on a token 26, or at client platform 24 by user 10. Once the public key is sent to a certificate authority 18 and signed, a user certificate is generated and provided to a local registration authority server. Local registration authority officer 12 copies the certificate (including the private key) onto a floppy disk, hardware token, or other storage medium, and then provides the certificate and private key to the user.

Current public key infrastructures for generating digital certificates have some problems. First, for large organizations, the cost to implement systems similar to that shown in Fig. 1 are high due to the need for multiple local registration authority officers to handle the large number of users that may reside at various locations. Generally, certificate requests are submitted via some method (paper, email, web, etc.) to the local registration authority. The certificate requests are queued for working off by the local registration authority officers. Current systems are inefficient because request queues will be subject to human intervention. The normal certificate issuance process involves actions by the requester and the local registration authority. After some time and effort, the requester receives the digital certificate. This time may be dependent on the number of requests in the queue and/or the efficiency of the local registration authority officers.

Moreover, current systems are less secure because a relationship between the requester and the local registration authority officer does not necessarily exist and, therefore, presents opportunity for an intruder to exploit. In addition, current systems are less secure since without a manager of the user (or some other individual who may personally know the user), in the process flow, there is no definitive proof who the pin and password (required for generation of digital certificates) given to the user is issued to.

WO 99/35783 discloses a client side public key authentification method and apparatus with short-lived certificates. According to this approach, a key distribution center generates public-private key pairs and certificate templates. An already registered user is assigned a user public-private key pair, which is stored in the key distribution center. A user, who authenticates to the key distribution center (e.g. using a password), prompts to recertify the user's public key by generating and signing a certificate. To register a new user, a respective new public-private key pair is conventionally generated on the basis of known information exchanges between an administrator server and a client/user side computer.

Therefore, a need exists for a PKI system and method that provides an inexpensive and reliable mechanism for implementing a face to face meeting as part of a new user registration process for generation of a digital certificate for the user.

### SUMMARY

The present invention provides a method for generating a signature certificate in a Public Key Infrastructure (PKI) according to claim 1. Data about a new user is entered into a database. The new user may request access to an enterprise server. A personal registration authority queries the database for new user information. A first piece of information required for generation of a signature certificate for the new user is sent by a registration web server to the new user. A personal registration authority is sent a second piece of information required for generation of a signature certificate for the new user. The second piece of information is delivered to the new user by the personal registration authority in a face-to-face meeting. The first piece of information and the second piece of information are provided to the registration web server by the new user. The new user is registered by the registration authority. A key pair for the new user that includes a public key and a private key are generated. The public key is provided to a certification authority. A signature certificate for the new user is generated and digitally signed by the certification authority. The signed signature certificate that includes the public key is sent to the database.

The present invention further provides an article according to claim 25, said article comprising a storage medium having instructions stored therein, the instructions when executed causing a processing device to perform: querying a database for new user information; sending the new user a first piece of information required for generation of a signature certificate for the new user; sending to the new user via a personal registration authority second piece of information required for generation of a signature certificate for the new user; receiving the first piece of information and the second piece of information from the new user; registering the new user; and signaling a client platform to generate a key pair for the new user comprising a public key and a private key.

The present invention also provides a system for generating a signature certificate in a Public Key Infrastructure (PKI)according to claim 26. The system includes: one or more servers operably connected to a network; a database operably connected to the network where the database contains information on at least one user; a directory operably connected to the network where the directory contains the same information as the database but provides faster access to the information; one or more client platforms operably connected to the network where the one or more users requests access to the one or more servers from the one or more client platforms; and a registration web server operably connected to the network where the registration web server sends the new user a first piece of information required for generation of a signature certificate for the new user and also sends a personal registration authority a second piece of information required for generation of a signature certificate for the new user. The second piece of information is delivered to the new user by the personal registration authority in a face-to-face meeting. The first piece of information and the second piece of information are used by the new user in a process for generation of public and private keys and a signature certificate for the new user.

### BRIEF DESCRIPTION OF THE DRAWINGS

The present invention is further described in the detailed description which follows in reference to the noted plurality of drawings by way of non-limiting examples of embodiments of the present invention in which like reference numerals represent similar parts throughout the several views of the drawings and wherein:
Fig. 1 is a block diagram of an example PKI system architecture;
Fig. 2 is a block diagram of an exemplary system architecture in which PKI processes may be practiced according to an example embodiment of the present invention; and
Fig. 3 is a flow chart of an example process for generation of a signature certificate in a public key infrastructure according to an example embodiment of the present invention.

### DETAILED DESCRIPTION

The particulars shown herein are by way of example and for purposes of illustrative discussion of the embodiments of the present invention. The description taken with the drawings make it apparent to those skilled in the art how the present invention may be embodied in practice.

Further, arrangements may be shown in block diagram form in order to avoid obscuring the invention, and also in view of the fact that specifics with respect to implementation of such block diagram arrangements is highly dependent upon the platform within which the present invention is to be implemented, i.e., specifics should be well within purview of one skilled in the art. Where specific details (e.g., circuits, flowcharts) are set forth in order to describe example embodiments of the invention, it should be apparent to one skilled in the art that the invention can be practiced without these specific details. Finally, it should be apparent that any combination of hard-wired circuitry and software instructions can be used to implement embodiments of the present invention, i.e., the present invention is not limited to any specific combination of hardware circuitry and software instructions.

Although example embodiments of the present invention may be described using an example system block diagram in an example host unit environment, practice of the invention is not limited thereto, i.e., the invention may be able to be practiced with other types of systems, and in other types of environments (e.g., servers).

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

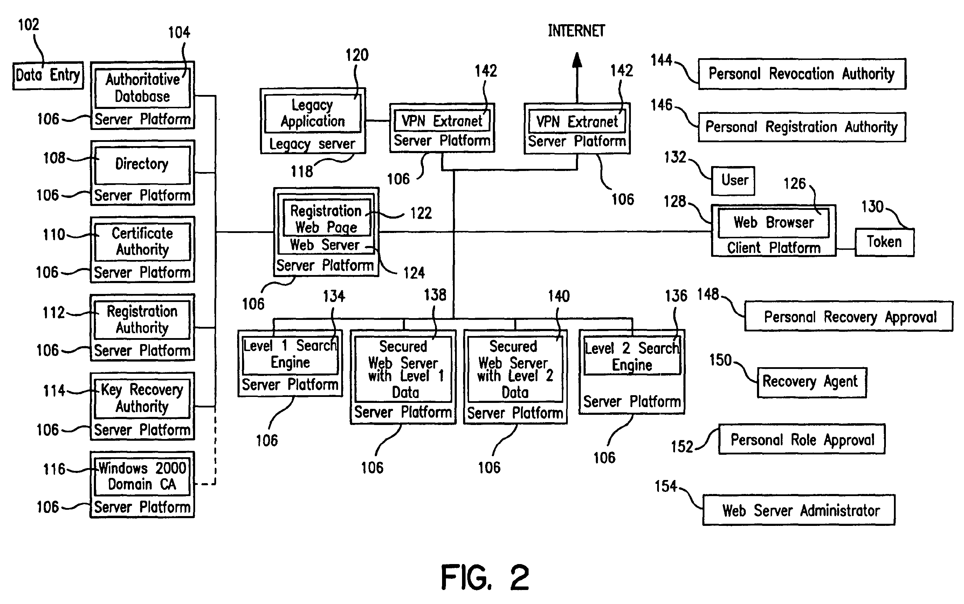

Fig. 2 shows a block diagram of an exemplary system architecture 100 in which Public Key Infrastructure (PKI) processes may be practiced according to an example embodiment of the present invention. The present invention is not limited to the system architecture 100 shown in Fig. 2. The boxes shown in Fig. 2 represent entities that may be hardware, software, or a combination of the two. The entities are operably connected together on a network. Entities not shown as being connected to the network represent one or more human beings that perform the function denoted inside the box.

System architecture 100 includes Data Entry 102 which performs a data entry function for Authoritative Database 104. Authoritative Database 104 is resident on server platform 106. A server platform 106 is referred to in this description but it should be understood that the present invention is not limited to any particular server architecture. Server platform 106 may be, for example, UNIX or Windows NT servers. Authoritative database 104 contains information about members of the group or enterprise (e.g., company) for which PKI services in accordance with the present invention may be performed. The present invention is not limited by the structure of the group or enterprise for which information is stored in the authoritative database 104. The information contained in Authoritative database 104 may include, for example, the name, address, telephone numbers, manager's name, employee identification, etc., of the members of the group or enterprise. Directory 108 contains the same information contained in database 104, but is optimized for fast look-up of the information stored therein rather than fast data entry. The information contained in Directory 108 may be accessed faster than accessing the information from database 104. Directory 108 functions similar to an on-line quickly accessible phone book, containing reference information about the members of the group or enterprise stored in authoritative database 104.

Certificate authority 110 may be conventional off-the shelf software executed on server platform 106. Certificate authority 110 provides storage of certificates and related information. This will be described in more detail hereinafter. Registration authority 112 may also be off-the shelf software executable on server platform 106. Registration authority 112 will also be described in more detail hereinafter. Key recovery authority 114 may also be off-the shelf server software executable on Server Platform 106, and may provide the function of recovering keys (e.g., archived or lost keys) for members of the group or enterprise.

A Windows 2000 Domain Certificate Authority (CA) 116 is shown with a dotted line connection to the network and may or may not be part of a system according to the present invention. Windows 2000 is able to use PKI certificates for network single sign-on, but Windows 2000 is designed to use only the Windows Certificate Authority Windows. Therefore, a system according to the present invention may include a conventional Certificate Authority 110 as well as a 2000 Domain CA 116.

Legacy server 118 executes legacy application programs 120. Legacy server 118 may be, without limitation, a main frame, mini-computer, workstation or other server capable of hosting legacy software applications. Legacy software applications generally may not be designed to be inherently interoperable with a PKI. Legacy applications 120 may be accessible on the client side by a custom client 128 such as an emulator or custom database Graphic User Interface (GUI). Examples of emulators are terminal emulators of an IBM 3270 or terminal emulators of a vt100.

Registration web page 122, which may be one or more pages, functions as the user interface to system architecture 100 shown in Fig. 1. Web Server 124 is a software application that serves Web Pages (such as web page 122) or other HTML outputs to a web browser client (such as web browser 126). Web Server 124 may be any software application that serves Web Pages or HTML outputs such as, for example, Apache, Microsoft Internet Information Server application, etc.

Web browser 126 is resident on client platform 128 which may be any user computer or computing device. Web browser 126 may be a client software application for browsing web pages such as, for example, HTML protocols, XML protocols, or other protocols. Web browser 126 may be programmed to operate with PKI certificates issued by certificate authority 110. Examples of web browsers which have this capability include Netscape Navigator and Microsoft Internet Explorer. The token 130 may be a smart card, a device with a Universal Serial Bus (USB), or other hardware token device capable of generating, storing, and/or using PKI certificates.

A user 132 is a person that uses or desires access to system architecture 100. User 132 may transition through a number of states which include, for example, a new user, a current user, and a former user. A former user is no longer a member of the group or enterprise. System architecture 100 is described with reference to two levels of security with each level corresponding to a different security requirement. The number of the levels of security is not a limitation of the present invention. The level 1 search engine 134 may be a search engine that is permitted to search system architecture 100, but is allowed access to only level 1 data which is the lowest level of security. Level 1 data may be, for example, data which is freely distributable whereas level 2 data may be considered to be proprietary. A Level 2 search engine 136 may be a search engine which is allowed to search both level 1 and level 2 data. A Level N search engine (not illustrated) may be a search engine which is allowed to search through servers possessing Levels 1 through N data.

A secured level server with Level 1 data may be a web server containing only level 1 data that is secured so that users may need to have level 1 access (at least) to access the level 1 servers. A secured web server with level 2 data 140 may be a web server that contains level 2 data that has been secured so that users must have at least level 2 access to access the level 2 servers. A user with level 2 access may have access to both level 1 and level 2 servers. A secured web server with level N data (not illustrated) is a web server that contains level N data which is accessible by users with level N or above. Users with level N or above access may have access to all levels of data up through level N data.

VPN Extranet 142 may be a software application which functions as a network gateway, which as illustrated, may be either to legacy server 118 and legacy application 120 or to an external network such as the Internet. Personal revocation authority 144 may be one or more people that are in charge of revocation of members from system network 100. Personal registration authority 146 may be one or more people that are in charge of registration of members in system network 100. Personal recovery approval 148 may be one or more people that are in charge of obtaining recovery of certificates. A Recovery Agent 150 may be one or more people that perform recovery of certificates and may only recover a certificate if the certificate has first been designated as recoverable by another person. Personal role approval 152 may be one or more people that approve different role functions within the system network 100. A web server administrator may be one or more people that are in charge of various web functions in system network 100.

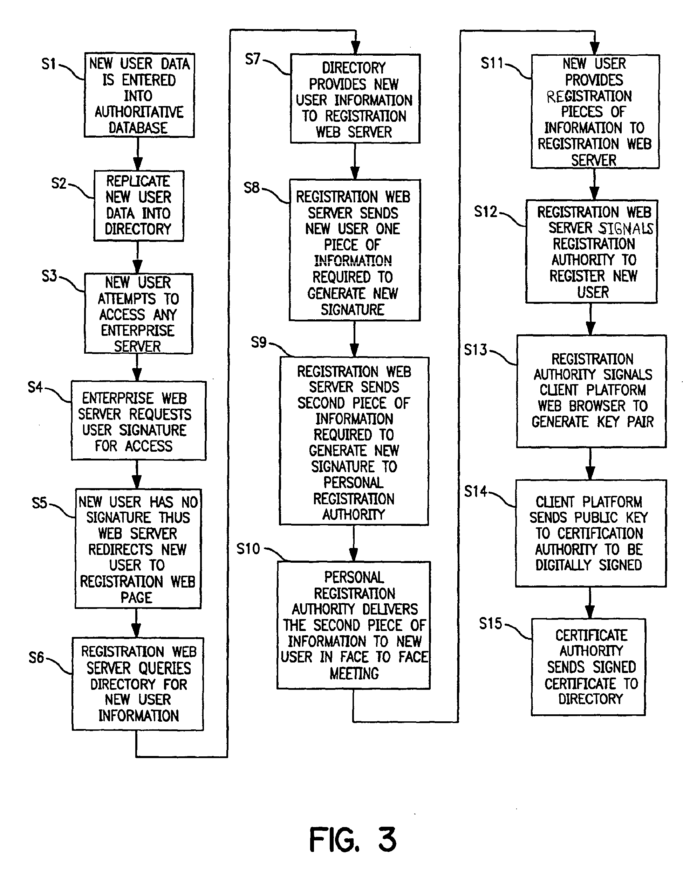

Fig. 3 shows a flow chart of an example process for generation of a signature certificate in a public key infrastructure according to an example embodiment of the present invention. In this example embodiment, a company or enterprise that has a large number of employees or individuals desires to generate digital signature certificates for a!! of their employees or individuals. Once an individuals hired by the enterprise, or the individual becomes a part of the group, the individual (new user) will need access to the servers and other resources of the enterprise. Therefore, the new user data will be entered into an authoritative database S1. The authoritative database contains information about all members of the enterprise. The member information includes data necessary to send registration materials to new users, e.g., home and/or work addresses, email addresses, telephone numbers, fax numbers, etc. The new user data entered into the authoritative database may be replicated into another directory database S2. The directory is structured to provide much faster access to the data than the authoritative database. Data in the directory is continually or periodically updated with the information in the authoritative database.

The new user attempts to access a server that is part of the enterprise S3. An enterprise web server requests the new user provide a signature for access to the enterprise server S4. Since the new user has no signature, the web server redirects the new user to a registration web page S5. The new user identifies itself to the registration web page by providing an identification number (ID), e.g., employee ID, social security number, etc. The registration web server uses the identification information from the user to query the directory for new user information S6. The directory provides information about the new user to the registration web server S7.

The registration web server now sends the new user a piece of information required to generate a new signature for the new user S8. This required information sent to the new user may be in the form of a personal identification number (PIN), a password, etc. The registration web server sends a different piece of information, required to generate a new signature for the new user, to a personal registration authority S9. This second piece of information may also be in the form of a PIN or password. The PIN or password sent to the new user may be sent to the new user's home address, email address or work address. The PIN or password sent to the personal registration authority may be sent to the personal registration authority's email address (in encrypted form), work address or home address. The precise delivery mechanism is unimportant, provided that it is independent of the mechanism used to deliver the password to the user. Use of separate delivery mechanisms is designed to minimize the possibility of interception of the both pieces of registration information by a party other than the new user. The personal registration authority delivers the second piece of information to the new user at a face to face meeting S10. It is preferred that the personal registration authority be a manager or supervisor of the new user, or another individual familiar with the identity of the new user. When this situation exists, the potential of an intruder fraudulently getting the second piece of information is eliminated.

The new user now revisits the registration web page and provides the two registration pieces of information to the registration web server S11. The registration web server verifies the information as valid, and then signals a registration authority to register the new user S12. The registration authority signals the web browser, or other resource, on the client platform to generate a private/public key pair S13. The public/private key pair may also be generated by a token or other device, or other application, at the client platform or elsewhere, and still be within the scope of the present invention. The browser at the client platform (or other source) generates the key pair for the new user and sends the generated public key to a certification authority to be digitally signed S14. The certificate authority signs the certificate and sends the signed certificate, that includes the public key, to the directory S15. The new user now has a signature certificate whereby others can access the public key of the new user to verify documents digitally signed by the new user with the private key of the new user. Once a certificate is generated for the new user, any PINs or passwords used in the generation process may be no longer valid (i.e., they have a one time use).

Digital signatures may be used in a number of ways. It is not necessary that digital signatures be implemented by encrypting an entire document. For example, a document sent from a user to a second person may be passed through a one way hashing algorithm to produce a smaller document, referred to as a digest. The digest is created by the user. The digest may be encrypted using the private key of the user. The user's private key serves as the user's (i.e., author's) private "signing key" to produce the document's digital signature. The digital signature (i.e., encrypted digest) may be appended to the document and both sent to the second person.

The second person (or any others) can then verify the digital signature on the document as being from the user by stripping the digital signature from the document and re-computing the hash function on the document to produce an "as received" digest. The second person may then access the user's public key from the directory. The second person uses the user's public key to decrypt the digest of the document as sent, and compare the decrypted digest to the as received digest. If the two digests match, the digital signature of the user is validated. If the two digests do not match, either the public key does not match the signer's (i.e., user's) private key, or the document has been modified since it was signed.

System and methods for generation of a signature certificate in a public key infrastructure according to the present invention is advantageous in that it provides cost savings and improved security. Costs are saved in that the present invention reduces paper work by incorporating an electronic process, shortens business process time lines since minimal amount of human intervention is required, and promotes remote collaboration amongst the members of the enterprise. Security is improved since eavesdropping is protected against, spoofing is protected against, and a system according to the present invention authenticates a user identity, including hostile insiders. The advantages of the present invention are accomplished since manual processes that current PKI systems use have been replaced with automated processes that accomplish many of the same tasks. System and methods according to the present invention provide a very inexpensive mechanism for implementing a face to face meeting as a part of the new user registration process, therefore, providing improved security while at the same time not adding significantly to the cost of the system (e.g., labor costs).

It is noted that the foregoing examples have been provided merely for the purpose of explanation and are in no way to be construed as limiting of the present invention. While the present invention has been described with reference to a preferred embodiment, it is understood that the words which have been used herein are words of description and illustration, rather than words of limitation. Changes may be made within the purview of the appended claims, as presently stated and as amended.

Although the present invention has been described herein with reference to particular methods, materials, and embodiments, the present invention is not intended to be limited to the particulars disclosed herein.

## Claims

1. A method for generation of a signature certificate in a Public Key Infrastructure PKI comprising:
generating (S13) a key pair for a new user (132) comprising a public key and a private key;
providing (S14) the public key to a certification authority (110); and
generating and digitally signing a signature certificate for the new user (132) by the certification Authority (110)
**characterized by**
sending (S8) by aregistration web server (124) to the new user (132) a first piece of information required for generation of a signature certificate for the new user (132);
sending (S9) by the registration web server (124) to a personal registration authority (146) a second piece of information required for generation of a signature certificate for the new user (132);
delivering (S10) the second piece of information to the new user (132) by the personal registration authority (146) in a face-to-face meeting; and
providing (S11) the first piece of information and the second piece of information to the registration web server (124) by the new user (132).

2. The method according to claim 1, further comprising entering (S1) data about the new user (132) into a database (104) before the first sending (S8).

3. The method according to claim 2, further comprising replicating (S2) the new user data into a directory (108).

4. The method according to claim 1, further comprising querying (S6) a database (104) for new user information by a registration authority (112) before the first sending.

5. The method according to claim 4, wherein the database (104) comprises a directory (108).

6. The method according to claim 1, further comprising registering (S7) the new user (132) by the registration authority (112) after the providing (S11) of the first piece of information to the new user (132).

7. The method according to claim 1, further comprising sending (S15) the signed signature certificate to a database (104) after the digitally signing the signature certificate.

8. The method according to claim 7, wherein the database comprises a directory (108).

9. The method according to claim 7, further comprising accessing the database (104) by a second user to access the signature certificate of the new user (132).

10. The method according to claim 9, further comprising verifying a digital signature of the new user (132) based on the signature certificate.

11. The method according to 10, wherein the verifying comprises:
generating a digest by executing an algorithm on a document by the new user (132);
generating a digital signature by encrypting the digest using the private key of the new user (132);
sending a document from the new user (132) to the second user;
receiving the document from the new user (132) by the second user, the document having the digital signature appended to the document;
using the public key referenced in the signature certificate of the new user (132) to decrypt the appended digital signature;
generating a received digest by executing the algorithm on the received document by the second user; and
verifying the digital signature of the new user (132) by comparing the decrypted digital signature with the received digest.

12. The method according to claim 1, further comprising generating the key pair at a platform (118) of the new user (132), the platform (128) providing the public key to the certification authority (110).

13. The method according to claim 1, wherein the first sending (S8) and the second sending (S9) are performed by the registration authority (112).

14. The method according to claim 1, wherein the registration authority (112) comprises an application on a server (106).

15. The method according to claim 1, further comprising sending the first piece of information to a home address of the new user (132).

16. The method according to claim 1, further comprising storing the public key and the private key on a token (130).

17. The method according to claim 16, wherein the token (130) comprises a smart card.

18. The method according to claim 16, wherein the token (130) comprises a device with a Universal Serial Bus /USB/ interface.

19. The method according to claim 1, wherein the signature certificate comprises information identifying at least one of the new user, the public key, the period of time that the certificate is valid, the algorithm used to generate the public key, and the public key length.

20. The method according to claim 1, further comprising:
requesting access to an enterprise server by the new user (132).

21. The method according to claim 20, further comprising requesting a user signature from the new user (132) after the requesting, the user signature requested by a web server (124).

22. The method according to claim 21, further comprising redirecting the new user (132) to a registration web page (122) if the new user (132) has no user signature.

23. The method according claim 20, further comprising sending the second piece of information to a work address of the personal registration authority (146).

24. The method according to claim 20, further comprising sending the second piece of information to an email address of the personal registration authority (146).

25. An article comprising a storage medium having instructions stored therein, the instructions when executed causing a processing device to perform:
querying (S6) a database (104) for new user information;
registering (S7) a new user (132); and
signaling a client platform to generate a key pair for the new user (132) comprising a public key and a private key,
**characterized by**
sending (S8) the new user (132) a first piece of information required for generation of a signature certificate for the new user (132);
sending (S9) to the new user (132) via a personal registration authority (146) a second piece of information required for generation of a signature certificate for the new user (132); and
receiving the first piece of information and the second piece of information from the new user (132).

26. A system for generating a signature certificate in a Public Key Infrastructure PKI comprising:
at least one server (106) operably connected to a network;
a database (104) operably connected to the network, the database containing information on at least one user;
a directory (108) operably connected to the network;
at least one client platform (128) operably connected to the network, the at least one user (132) requesting access to the at least one server (106) from the at least one client platform (128); and
a registration web server (124) operably connected to the network;
**characterized by**
the directory (108) containing the same information as the database (104) but providing faster access to the information; and
the registration web server (124) sending (S8) the new user (132) a first piece of information required for generation of a signature certificate for the new user (132) and sending (S9) a personal registration authority (146) a second piece of information required for generation of a signature certificate for the new user (132);
wherein the second piece of information is delivered to the new user (132) by the personal registration authority (146) in a face-to-face meeting, the first piece of information and the second piece of information being used by the new user (132) in a process for generation of public and private keys and a signature certificate for the new user (132).

27. The system according to claim 26, further comprising a registration authority application (112) residing at one of the at least one servers (106), the registration authority application (112) registering (S7) the new user (132) based on the new user (132) supplying the first piece of information and the second piece of information to the registration web server (124), the registration authority application (112) instructing an application at the client platform (128) to generate the public and private keys for the new user (132).

28. The system according to claim 26, further comprising a certificate authority application (110) residing at one of the at least one servers (106), the certificate authority application (110) receiving the public key and generating and digitally signing a signature certificate for the new user (132).

29. The system according to claim 26, further comprising a token (130), the token (130) being connectable to the at least one client platform (128), the token (130) storing the public and private keys of the new user (132).

## Patentansprüche

1. Verfahren zum Erzeugen eines Signaturzertifikats in einer Infrastruktur mit öffentlichen Schlüsseln, PKI, aufweisend:
Erzeugen (S13) eines Schlüsselpaars für einen neuen Nutzer (132), umfassend einen öffentlichen Schlüssel und einen privaten Schlüssel;
Bereitstellen (S14) des öffentlichen Schlüssels an eine Zertifizierungsstelle (110); und
Erzeugen und digitales Signieren eines Signaturzertifikats für den neuen Nutzer (132) durch die Zertifizierungsstelle (110),
**gekennzeichnet durch**
Senden (S8), **durch** einen Registrierungs-Webserver (124) an den neuen Nutzer (132), eines ersten Informationsstücks, das zur Erzeugung eines Signaturzertifikats für den neuen Nutzer (132) benötigt wird;
Senden (S9), **durch** den Registrierungs-Webserver (124) an eine persönliche Registrierungsstelle (146), eines zweiten Informationsstücks, das zur Erzeugung eines Signaturzertifikats für den neuen Nutzer (132) benötigt wird;
Aushändigen (S10) des zweiten Informationsstücks an den neuen Nutzer durch die persönliche Registrierungsstelle (146) in einem Treffen von Angesicht zu Angesicht; und
Bereitstellen (S11) des ersten Informationsstücks und des zweiten Informationsstücks an den Registrierungs-Webserver (124) **durch** den neuen Nutzer (132).

2. Verfahren nach Anspruch 1, ferner aufweisend ein Eingeben (51) von Daten über den neuen Nutzer (132) in eine Datenbank (104) vor dem ersten Senden (S8).

3. Verfahren nach Anspruch 1, ferner aufweisend ein Nachbilden (S2) der neuen Nutzerdaten in ein Datenverzeichnis (108).

4. Verfahren nach Anspruch 1, ferner aufweisend ein Abfragen (S6) einer Datenbank (104) nach neuer Nutzerinformation durch eine Registrierungsstelle (112) vor dem ersten Senden.

5. Verfahren nach Anspruch 4, wobei die Datenbank (104) ein Datenverzeichnis (108) umfasst.

6. Verfahren nach Anspruch 1, ferner umfassend ein Registrieren (57) des neuen Nutzers (132) durch die Registrierungsstelle (112) nach dem Bereitstellen (S11) des ersten Informationsstücks an den neuen Nutzer (132).

7. Verfahren nach Anspruch 1, ferner umfassend ein Senden (S15) des signierten Signaturzertifikats an eine Datenbank (104) nach dem digitalen Signieren des Signaturzertifikats.

8. Verfahren nach Anspruch 7, wobei die Datenbank ein Datenverzeichnis (108) umfasst.

9. Verfahren nach Anspruch 7, ferner umfassend ein Zugreifen auf die Datenbank (104) durch einen zweiten Nutzer, um auf das Signaturzertifikat des neuen Nutzers (132) zuzugreifen.

10. Verfahren nach Anspruch 9, ferner umfassend ein Verifizieren einer digitalen Signatur des neuen Nutzers (132) auf der Grundlage des Signaturzertifikats.

11. Verfahren nach Anspruch 10, wobei das Verifizieren umfasst:
Erzeugen eines Extrakts durch Anwenden eines Algorithmus' auf ein Dokument durch den neuen Nutzer (132);
Erzeugen einer digitalen Signatur durch Verschlüsseln des Extrakts unter Verwendung des privaten Schlüssels des neuen Nutzers (132);
Senden eines Dokuments vom neuen Nutzer (132) an den zweiten Nutzer;
Empfangen des Dokuments vom neuen Nutzer (132) durch den zweiten Nutzer, wobei das Dokument die digitale Signatur an das Dokument angehängt hat;
Verwenden des öffentlichen Schlüssels, der in dem Signaturzertifikat des neuen Nutzers (132) referenziert ist, um die angehängte digitale Signatur zu entschlüsseln;
Erzeugen eines empfangenen Extraktes durch Anwenden des Algorithmus auf das empfangene Dokument durch den zweiten Nutzer; und
Verifizieren der digitalen Signatur des neuen Nutzers (132) durch Vergleichen der entschlüsselten digitalen Signatur mit dem empfangenen Extrakt.

12. Verfahren nach Anspruch 1, ferner umfassend ein Erzeugen des Schlüsselpaars an einer Plattform (118) des neuen Nutzers (132), wobei die Plattform (128) den öffentlichen Schlüssel der Zertifizierungsstelle (110) bereitstellt.

13. Verfahren nach Anspruch 1, wobei das erste Senden (S8) und das zweite Senden (S9) von der Registrierungsstelle (112) durchgeführt wird.

14. Verfahren nach Anspruch 1, wobei die Registrierungsstelle (112) eine Anwendung auf einem Server (106) umfasst.

15. Verfahren nach Anspruch 1, ferner umfassend ein Senden des ersten Informationsstücks an eine Heimatadresse des neuen Nutzers (132).

16. Verfahren nach Anspruch 1, ferner umfassend ein Speichern des öffentlichen Schlüssels und des privaten Schlüssels auf einem Token (130).

17. Verfahren nach Anspruch 1, wobei der Token (130) eine Smartcard umfasst.

18. Verfahren nach Anspruch 1, wobei der Token (130) eine Vorrichtung mit einer universellen seriellen Bus, USB, -Schnittstelle umfasst.

19. Verfahren nach Anspruch 1, wobei das Signaturzertifikat Information umfasst, die den neuen Nutzer, den öffentlichen Schlüssel, die Zeitdauer, wie lange das Zertifikat gültig ist, den Algorithmus, der zur Erzeugung des öffentlichen Schlüssels verwendet wird, und / oder die Länge des öffentlichen Schlüssels identifiziert.

20. Verfahren nach Anspruch 1, ferner umfassend:
Anfordern eines Zugriffs auf einen Unternehmensserver durch den neuen Nutzer (132).

21. Verfahren nach Anspruch 20, ferner umfassend ein Anfordern einer Nutzersignatur vom neuen Nutzer (132) nach dem Anfordern, wobei die Nutzersignatur von einem Webserver (124) angefordert wird.

22. Verfahren nach Anspruch 21, ferner umfassend ein Weiterleiten des neuen Nutzers (132) auf eine Registrierungswebseite (122), falls der neue Nutzer (132) keine Nutzersignatur besitzt.

23. Verfahren nach Anspruch 20, ferner umfassend ein Senden des zweiten Informationsstücks an eine Arbeitsadresse der persönlichen Registrierungsstelle (146).

24. Verfahren nach Anspruch 20, ferner umfassend ein Senden des zweiten Informationsstücks an eine Emailadresse der persönlichen Registrierungsstelle (146).

25. Gegenstand umfassend ein Speichermedium mit darin gespeicherten Anweisungen, wobei die Anweisungen dann, wenn sie ausgeführt werden, eine Verarbeitungsvorrichtung dazu veranlassen, durchzuführen:
Abfragen (S6) einer Datenbank (104) nach neuer Nutzerinformation;
Registrieren (S7) eines neuen Nutzers (132); und
Signalisieren einer Client-Plattform, ein Schlüsselpaar für den neuen Nutzer (132) zu erzeugen, das einen öffentlichen Schlüssel und einen privaten Schlüssel umfasst,
**gekennzeichnet durch**
Senden (S8) an den neuen Nutzer (132) ein erstes Informationsstück, das zur Erzeugung eines Signaturzertifikats für den neuen Nutzer (132) benötigt wird;
Senden (S9) an den neuen Nutzer (132), **durch** eine persönliche Registrierungsstelle (146), ein zweites Informationsstück, das zur Erzeugung eines Signaturzertifikats für den neuen Nutzer (132) benötigt wird;
Empfangen des ersten Informationsstücks und des zweiten Informationsstücks vom neuen Nutzer (132).

26. System zum Erzeugen eines Signaturzertifikats in einer Infrastruktur mit öffentlichen Schlüsseln, PKI, umfassend:
zumindest einen Server (106), der mit einem Netzwerk wirkend verbunden ist;
eine Datenbank (104), die mit dem Netzwerk wirkend verbunden ist, wobei die Datenbank Information über zumindest einen Nutzer enthält;
ein Datenverzeichnis (108), das mit dem Netzwerk wirkend verbunden ist;
zumindest eine Client-Plattform (128), die mit dem Netzwerk wirkend verbunden ist, wobei der mindestens eine Nutzer (132) einen Zugriff auf den mindestens einen Server (106) von der mindestens einen Client-Plattform aus anfordert; und
einen Registrierungs-Webserver (124), der mit dem Netzwerk wirkend verbunden ist;
**gekennzeichnet dadurch, dass**
das Datenverzeichnis (108) die gleiche Information wie die Datenbank (104) enthält, aber einen schnelleren Zugriff auf die Information bereitstellt; und
der Registrierungs-Webserver (124) dem neuen Nutzer (132) ein erstes Informationsstück sendet (S8), das zur Erzeugung eines Signaturzertifikats für den neuen Nutzer (132) benötigt wird, und einer persönlichen Registrierungsstelle (146) ein zweites Informationsstück sendet, das zur Erzeugung eines Signaturzertifikats für den neuen Nutzer (132) benötigt wird;
wobei das zweite Informationsstück an den neuen Nutzer (132) durch die persönliche Registirierungsstelle (146) in einem Treffen von Angesicht zu Angesicht übergeben wird, wobei das erste Informationsstück und das zweite Informationsstück vom neuen Nutzer (132) in einem Ablauf zum Erzeugen eines öffentlichen und eines privaten Schlüssels und eines Signaturzertifikats für den neuen Nutzer (132) verwendet werden.

27. System nach Anspruch 26, ferner umfassend eine Registrierungsstellenanwendung (112), die auf einem der mindestens einen Servern (106) gespeichert ist, wobei die Registrierungsstellenanwendung (112) den neuen Nutzer (132) registriert (S7) auf der Grundlage, dass der neue Nutzer (132) das erste Informationsstück und das zweite Informationsstück dem Registierungswebserver (124) liefert, wobei Registrierungsstellenanwendung (112) eine Anwendung an der Client-Plattform (128) anweist, den öffentlichen und den privaten Schlüssel für den neuen Nutzer (132) zu erzeugen.

28. System nach Anspruch 26, ferner umfassend eine Zertifikatsstellenanwendung (110), die auf einem der mindestens einen Servern (106) gespeichert ist, wobei die Zertifikatsstellenanwendung (110) den öffentlichen Schlüssel empfängt und ein Signaturzertifikat für den neuen Nutzer (132) erzeugt und digital signiert.

29. System nach Anspruch 26, ferner umfassend einen Token (130), wobei der Token (130) mit der mindesten einen Client-Plattform (128) verbindbar ist, wobei der Token (130) den öffentlichen und den privaten Schlüssel des neuen Nutzers (132) speichert.

## Revendications

1. Procédé de génération d'un certificat de signature dans une infrastructure de clé publique PKI, comprenant les étapes consistant à :
générer (S13) pour un nouvel utilisateur (132) une paire de clés comprenant une clé publique et une clé privée ;
fournir (S14) la clé publique à une autorité de certification (110) ; et
faire générer et signer numériquement un certificat de signature pour le nouvel utilisateur (132) par l'autorité de certification (110),
**caractérisé par**
l'envoi (S8) par un serveur web d'administration (124) au nouvel utilisateur (132) d'un premier élément d'information nécessaire à la génération d'un certificat de signature pour le nouvel utilisateur (132) ;
l'envoi (59) par le serveur web d'administration (124) à une autorité d'administration personnelle (146) d'un deuxième élément d'information nécessaire à la génération d'un certificat de signature pour le nouvel utilisateur (132) ;
la délivrance (S10) du deuxième élément d'information au nouvel utilisateur (132) par l'autorité d'administration personnelle (146) lors d'une rencontre face à face ; et
la fourniture (S11) du premier élément d'information et du deuxième élément d'information au serveur web d'administration (124) par le nouvel utilisateur (132).

2. Procédé selon la revendication 1, comprenant en outre l'étape consistant à entrer (S1) de données se rapportant au nouvel utilisateur (132) dans une base de données (104) avant le premier envoi (S8).

3. Procédé selon la revendication 2, comprenant en outre l'étape consistant à reproduire (S2) les données de nouvel utilisateur dans un répertoire (108).

4. Procédé selon la revendication 1, comprenant en outre l'étape consistant à faire interroger (S6) une base de données (104) pour les données de nouvel utilisateur par une autorité d'administration (112) avant le premier envoi.

5. Procédé selon la revendication 4, dans lequel la base de données (104) comprend un répertoire (108).

6. Procédé selon la revendication 1, comprenant en outre l'étape consistant à faire enregistrer (S7) le nouvel utilisateur (132) par l'autorité d'administration (112) après la délivrance (S11) du premier élément d'information au nouvel utilisateur (132).

7. Procédé selon la revendication 1, comprenant en outre l'étape consistant à envoyer (515) le certificat de signature signé à une base de données (104) après la signature numérique du certificat de signature.

8. Procédé selon la revendication 7, dans lequel la base de données comprend un répertoire (108).

9. Procédé selon la revendication 7, comprenant en outre l'étape consistant à faire accéder un deuxième utilisateur à la base de données (104) de manière à accéder au certificat de signature du nouvel utilisateur (132).

10. Procédé selon la revendication 9, comprenant en outre l'étape consistant à vérifier une signature numérique du nouvel utilisateur (132) en se basant sur le certificat de signature.

11. Procédé selon la revendication 10, dans lequel la vérification comprend les étapes consistant à ;
faire générer par le nouvel utilisateur (132) un résumé par exécution d'un algorithme sur un document ;
générer une signature numérique par cryptage du résumé au moyen de la clé privée du nouvel utilisateur (132) ;
faire envoyer par le nouvel utilisateur (132) un document au deuxième utilisateur ;
faire recevoir par le deuxième utilisateur le document provenant du nouvel utilisateur (132), le document comportant la signature numérique ajoutée au document ;
utiliser la clé publique référencée dans le certificat de signature du nouvel utilisateur (132) pour décrypter la signature numérique ajoutée ;
faire générer par le deuxième utilisateur un résumé reçu par exécution de l'algorithme sur le document reçu ; et
vérifier la signature numérique du nouvel utilisateur (132) par comparaison de la signature numérique décryptée avec le résumé reçu.

12. Procédé selon la revendication 1, comprenant en outre l'étape consistant à générer la paire de clés à une plate-forme (118) du nouvel utilisateur (132), la plate-forme (128) délivrant la clé publique à l'autorité de certification (110).

13. Procédé selon la revendication 1, dans lequel le premier envoi (S8) et le deuxième envoi (S9) sont exécutés par l'autorité d'administration (112).

14. Procédé selon la revendication 1, dans lequel l'autorité d'administration (112) comprend une application sur un serveur (106).

15. Procédé selon la revendication 1, comprenant en outre l'étape consistant à envoyer le premier élément d'information à une adresse de domicile du nouvel utilisateur (132).

16. Procédé selon la revendication 1, comprenant en outre l'étape consistant à mémoriser la clé publique et la clé privée sur un jeton (130).

17. Procédé selon la revendication 16, dans lequel le jeton (130) comprend une carte intelligente.

18. Procédé selon la revendication 16, dans lequel le jeton (130) comprend un dispositif muni d'une interface universelle de bus série USB.

19. Procédé selon la revendication 1, dans lequel le certificat de signature comprend une information identifiant au moins un élément parmi le nouvel utilisateur, la clé publique, la période de validité du certificat, l'algorithme utilisé pour générer la clé publique, et la longueur de la clé publique.

20. Procédé selon la revendication 1, comprenant en outre l'étape consistant à
faire demander par le nouvel utilisateur (132) l'accès à un serveur d'entreprise.

21. Procédé selon la revendication 20, comprenant en outre l'étape consistant à demander une signature d'utilisateur au nouvel utilisateur (132) après la demande de la signature d'utilisateur demandée par un serveur web (124).

22. Procédé selon la revendication 21, comprenant en outre l'étape consistant à réorienter le nouvel utilisateur (132) vers une page web (122) d'administration si le nouvel utilisateur (132) n'a pas de signature d'utilisateur.

23. Procédé selon la revendication 20, comprenant en outre l'étape consistant à envoyer le deuxième élément d'information à une adresse professionnelle de l'autorité d'administration personnelle (146).

24. Procédé selon la revendication 20, comprenant en outre l'étape consistant à envoyer le deuxième élément d'information à une adresse électronique de l'autorité d'administration personnelle (146).

25. Article comprenant un support de mémorisation y mémorisant des instructions, les instructions entraînant quand elles sont exécutées l'exécution par un dispositif de traitement des étapes consistant à :
interroger (S6) une base de données (104) sur les informations de nouvel utilisateur ;
enregistrer (S7) un nouvel utilisateur (132) ; et
signaler à une plate-forme de client de générer pour le nouvel utilisateur (132) une paire de clés comprenant une clé publique et une clé privée,
**caractérisé par**
l'envoi (58) au nouvel utilisateur (132) d'un premier élément d'information nécessaire à la génération d'un certificat de signature pour le nouvel utilisateur (132) ;
l'envoi (S9) au nouvel utilisateur (132) par l'intermédiaire d'une autorité d'administration personnelle (146) d'un deuxième élément d'information nécessaire à la génération d'un certificat de signature pour le nouvel utilisateur (132) ; et
la réception du premier élément d'information et du deuxième élément d'information par le nouvel utilisateur (132).

26. Système de génération d'un certificat de signature dans une infrastructure de clé publique PKI, comprenant :
au moins un serveur (106) pouvant être mis en oeuvre connecté à un réseau ;
une base de données (104) pouvant être mise en oeuvre connectée au réseau, la base de données contenant des informations sur au moins un utilisateur ;
un répertoire (108) pouvant être mis en oeuvre connecté au réseau ;
au moins une plate-forme de client (128) pouvant être mis en oeuvre connectée au réseau, l'au moins un utilisateur (132) demandant l'accès à l'au moins un serveur (106) à partir de l'au moins une plate-forme de client (128) ; et
un serveur web d'administration (124) pouvant être mis en oeuvre connecté au réseau ;
**caractérisé en ce que**
le répertoire (108) contient les mêmes informations que la base de données (104), mais permet un accès plus rapide aux informations ; et
le serveur web d'administration (124) envoie (S8) au nouvel utilisateur (132) un premier élément d'information nécessaire à la génération d'un certificat de signature pour le nouvel utilisateur (132) et envoie (S9) à une autorité d'administration personnelle (146) d'un deuxième élément d'information nécessaire à la génération d'un certificat de signature pour le nouvel utilisateur (132) ;
dans lequel le deuxième élément d'information est délivré au nouvel utilisateur (132) par l'autorité d'administration personnelle (146) lors d'une rencontre face à face, le premier élément d'information et le deuxième élément d'information étant utilisés par le nouvel utilisateur (132) dans un processus de génération de clés publique et privée et d'un certificat de signature pour le nouvel utilisateur (132).

27. Système selon la revendication 26, comprenant en outre une application d'autorité d'administration (112) résidant à l'au moins un des serveurs (106), l'application d'autorité d'administration (112) enregistrant (S7) le nouvel utilisateur (132) en se basant sur la délivrance par le nouvel utilisateur (132) du premier élément d'information et du deuxième élément d'information au serveur web d'administration (124), l'application d'autorité d'administration (112) donnant à une application de la plate-forme de client (128) l'instruction de générer les clés publique et privée pour le nouvel utilisateur (132).

28. Système selon la revendication 26, comprenant en outre une application d'autorité de certification (110) résidant à l'au moins des serveurs (106), l'application d'autorité de certification (110) recevant la clé publique et générant et signant numériquement un certificat de signature pour le nouvel utilisateur (132).

29. Système selon la revendication 26, comprenant en outre un jeton (130), le jeton pouvant être connecté à l'au moins une plate-forme de client (128), le jeton (130) mémorisant les clés publique et privée du nouvel utilisateur (132).
